# EUROPÄISCHE PATENTSCHRIFT

(11) **EP 1 417 405 B1**
(45) Veröffentlichungstag und Bekanntmachung des Hinweises auf die Patenterteilung: **10.01.2007**
(21) Anmeldenummer: 02712716.6
(22) Anmeldetag: 24.04.2002
(51) Int. Cl.: F02D 35/02, F02D 21/08

(54) **VERFAHREN ZUR REGELUNG EINES VERBRENNUNGSMOTORS MIT ABGASRÜCKFÜHRUNG SOWIE EINRICHTUNG ZUR DURCHFÜHRUNG DES VERFAHRENS**
METHOD FOR ADJUSTING AN INTERNAL COMBUSTION ENGINE WITH EXHAUST GAS RECIRCULATION AND DEVICE FOR CARRYING OUT SAID METHOD
PROCEDE POUR REGULER UN MOTEUR THERMIQUE A RECYCLAGE DES GAZ BRULES ET DISPOSITIF POUR LA MISE EN OEUVRE DUDIT PROCEDE

(30) Priorität: 06.08.2001 CH 143901
(43) Veröffentlichungstag der Anmeldung: 12.05.2004
(73) Patentinhaber: Menag Holding AG, 4435 Niederdorf (CH)
(72) Erfinder: RIEDER, Otmar, CH-4462 Rickenbach (CH); LAGIER, Georges, CH-1073 Savigny (CH)
(74) Vertreter: Eder, Carl E.
(86) Internationale Anmeldenummer: PCT/CH2002/000228
(87) Internationale Veröffentlichungsnummer: WO 2003/014552

(56) Entgegenhaltungen:
- WO-A-99/42718
- DE-A- 3 410 930
- DE-A- 19 754 353
- US-A- 5 947 063

## Beschreibung

### Technisches Gebiet

Die Erfindung betrifft ein Verfahren zur Regelung eines Verbrennungsmotors mit Abgasrückführung sowie eine Einrichtung zur Durchführung des Verfahrens, nämlich ein Verfahren gemäss dem Oberbegriff des Anspruchs 1 und eine Einrichtung gemäss Anspruchs 4.

Die Einrichtung ist zum Beispiel für ein Blockheizkraftwerk mit einem stationären Gasmotor vorgesehen.

Für einen erfolgreichen und wirtschaftlichen Betrieb von Blockheizkraftwerken sind im wesentlichen drei Kriterien ausschlaggebend. Die Leistungsdichte, der Wirkungsgrad und die Berücksichtigung von Emissionsgrenzwerten.

Von den drei erwähnten Kriterien nehmen die spezifischen Emissionsraten der Verbrennungsprodukte - und unter diesen der Ausstoss an NOₓ - eine zentrale Stellung ein. Das liegt an staatlichen Bestimmungen, die für alle Aggregate, die mit fossilen Treibstoffen betrieben werden, NOₓ-Höchstwerte von 50 bis 80 ng/Nm³ vorgeben. Ein Gasmotor, der mit einem Ausstoss von typischerweise 30 mg/Nm³ dieser Bedingung genügt, hat einen Wirkungsgrad von 32%. Andere Antriebskonzepte haben zwar einen höheren Wirkungsgrad, liegen mit ihren Abgaswerten aber sehr oft ausserhalb der gesetzlich vorgegebenen Grenzwerten.

### Stand der Technik

Für den Einsatz in Blockheizkraftwerken haben sich in der Praxis zwei Typen von Motoren durchgesetzt. Es sind dies einerseits ein Lambda-1-Saugmotor mit einem Dreiwegekatalysator und andererseits ein Gasmagermotor mit einem Turboauflader, aber ohne Katalysator.

Beim Lambda-1-Saugmotor ist das Verhältnis zwischen der effektiv zugeführten Luftmenge und der zur Verbrennung notwendigen Mindestluftmenge = 1, was bedeutet, dass der Verbrennungsluft diejenige stöchiometrische Menge an Brenngas zugeführt wird, die notwendig ist, um alle Sauerstoffmoleküle der Luft in der Verbrennungsreaktion zu oxidieren. Die Abgase aus diesem Verbrennungsverfahren werden mit einem Dreiwegekatalysator gereinigt, so dass das austretende Abgas verhältnismässig geringe, die vorgenannten Grenzwerte unterschreitende Emissionswerte aufweist. Die Regelung der Gaszufuhr zur Verbrennungsluft erfolgt in diesem Fall über eine im Abgasstrom angeordnete Lambdasonde, welche fortlaufend den Sauerstoffgehalt im Abgasstrom misst und über ein steuerbares Stellglied die erforderliche Brenngasmenge in Abhängigkeit vom gemessenen Sauerstoffgehalt reguliert. Ein solcher Lambda-1-Saugmotor weist den Nachteil auf, dass er einen verhältnismässig geringen Wirkungsgrad besitzt, also eine geringe Leistungsausbeute aufweist. Diese kann zwar durch Aufladung und Vorverdichtung des Luft-Brenngasgemisches erhöht werden. Dadurch steigen jedoch Druck und Temperatur im Brennraum an, was die Selbstentzündung unverbrannter Treibstoffteile, das sogenannte Klopfen, fördert und die Lebensdauer des Motors bedeutend reduziert. Ein Lambda-1-Saugmotor mit Aufladung ist demzufolge für eine stationäre Einrichtung mit hoher Lebensdauer nicht verwendbar.

Beim Gasmagermotor wird dem Brenngas eine überhöhte Menge an Verbrennungsluft zugeführt, um dadurch die Verbrennungstemperatur möglichst gering zu halten und die Bildung von Schadstoffen zu reduzieren. Diese Technologie, bei welcher der Lambdawert üblicherweise 1,6 bis 1,8 beträgt, wird vor allem bei sogenannten Problemgasen, wie zum Beispiel bei Klärgas, Deponiegas oder Biogas, eingesetzt. Diese Gase können bei Verwendung als Verbrennungsgas nicht zusammen mit einem Dreiwegekatalysator verwendet werden, da sie bekannterweise einen solchen zerstören würden. Es ist daher mit einem Gasmagermotor äusserst schwierig, die gesetzlich vorgeschriebenen Emissions-Grenzwerte einzuhalten, und wenn ja, dann doch mit erheblichem Aufwand, beispielsweise mit Zuschaltung eines Oxidationskatalysators in den Abgasstrom. Dazu kommt, dass aufgrund des hohen Luftüberschusses die Leistungsausbeute beim Gasmagermotor sehr gering ist. Um diesen Nachteil auszugleichen, wird das Luft-Brenngasgemisch vor dem Eintritt in die Verbrennungskammern des Motors in einem Abgasturbolader aufgeladen und verdichtet, wobei auch in diesem Fall die Brenngaszufuhr mittels einer Lambdasonde geregelt werden kann. Gerade aber bei der Verwendung von den sogenannten Problemgasen ist die Lebensdauer dieser Sonde stark verkürzt, was wiederum hohe Wartungskosten zur Folge hat.

Bei der Regelung der beiden vorstehend beschriebenen Verbrennungsmotoren ist es unerlässlich, während des Betriebes das Verhältnis zwischen Verbrennungsluft und Brenngas fortlaufend zu korrigieren. Zum Starten des Motors, im Teillastbereich und bei wechselnden Einflüssen, wie Änderungen der Gasqualität, Temperatursprüngen etc. muss das Gemischverhältnis ständig den veränderten Betriebsbedingungen angepasst werden. Dazu kommt, dass insbesondere beim Betrieb des Lambda-1-Gasmotors dem Lambdafenster besonders enge Grenzen gesetzt sind, um eine einwandfreie Umsetzungsrate des Dreiwegekatalysators zu erreichen. Die Steuerung der bekannten Motoren aufgrund dieser Parameter ist nicht optimiert und muss für eine Leistungssteigerung verbessert werden.

### Abriss der Erfindung

Der vorliegenden Erfindung liegt nun die Aufgabe zugrunde, ein neuartiges Verfahren zur Regelung eines stationären Verbrennungsmotors, insbesondere Gasmotors, zu schaffen, das die vorgenannten Schwierigkeiten sowie insbesondere die Nachteile der bekannten Verfahren nicht aufweist und ermöglicht, den Verbrennungsprozess möglichst schnell an sich ändernden Betriebsbedingungen anzupassen, um dadurch bei hoher Betriebssicherheit und Lebensdauer eine möglichst geringe Schadstoffemission bei gleichzeitig erhöhter Wirkungsleistung zu erzielen.

Diese Aufgabe wird gemäss der Erfindung durch ein Verfahren mit den Merkmalen des Anspruchs 1 und durch eine Einrichtung mit den Merkmalen des Anspruchs 4 gelöst.

Vorteilhafte Ausbildungen des Verfahrens und der Einrichtung gehen aus den abhängigen Ansprüchen hervor.

Erfindungsgemäss wird bei einem mit einem Zusatzaggregat zur Verdichtung der zur Verbrennung erforderlichen Luft ausgestatteten Lambda-1-Gasmotor der vorstehend beschriebenen Art eine bestimmte Menge des abgekühlten Abgases dem Luft-Brenngasgemisch beigemengt, wobei diese Zugabe in Abhängigkeit von der im Brennraum des Gasmotors gemessenen Temperatur gesteuert wird. Vorzugsweise wird dem Luft-Brennstoffgemisch fortlaufend abgekühltes Abgas zugeführt, und zwar soviel, dass der Anteil des Abgases in der gebildeten Gasmischung 20 bis 25 Vol.% beträgt.

Als Zusatzaggregat zur Verdichtung und Verbrennung des Luft-Brenngasgemisches dient vorzugsweise ein Turbolader. Beim Turbolader wird die zur Verdichtung erforderliche Energie durch eine Turbine dem Abgas entnommen.

Durch die Zugabe von aus dem Katalysator gewonnenem, abgekühltem Abgas wird der Verbrennungsprozess gekühlt. Da dem Abgas der Sauerstoff praktisch vollständig entzogen ist, kann dieses dem stöchiometrischen Luft-Brenngasgemisch beigemengt werden, ohne dass der Lambdawert verändert wird. Das erfindungsgemässe Verfahren vereint also die Vorteile des bekannten Lambda-1-Motors mit Dreiwegekatalysator, das heisst eine höhere Leistungsdichte und Einsatzmöglichkeit, mit der aus der Magerverbrennung bekannten Kühlung der Verbrennungstemperatur, also der Erhöhung der Standzeiten.

### Kurze Beschreibung der Zeichnung

Der Erfindungsgegenstand soll nun anhand eines in der Zeichnung dargestellten Ausführungsbeispiels erläutert werden. Die einzige Figur der Zeichnung zeigt dabei ein Prinzipschema einer erfindungsgemässen Einrichtung mit einem Lambda-1-Verbrennungsmotor und einer Steuervorrichtung zur kontrollierten Rückführung von Abgas in den Verbrennungsmotor, bzw. Gasmotor.

### Beschreibung eines bevorzugten Ausführungsbeispieles

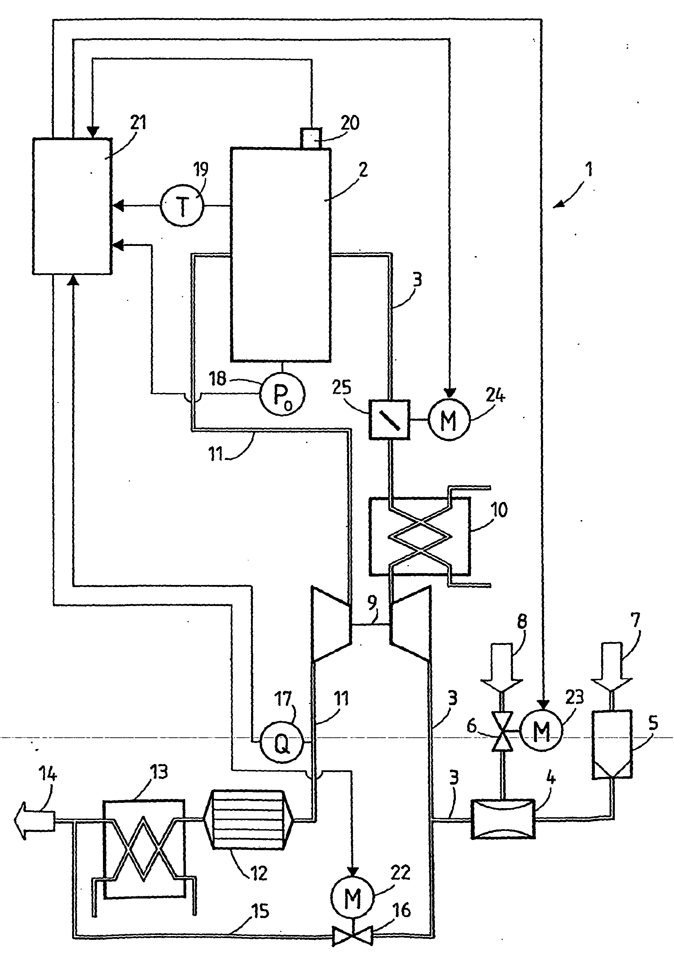

Die in der Figur 1 als ganzes mit 1 bezeichnete Einrichtung weist einen Gasmotor 2 auf, der von einem nicht gezeichneten Gestell gehalten wird. Zum Gasmotor 2 führt eine Ansaugleitung 3 für das Luft-Brenngasgemisch. Dieser Ansaugleitung 3 ist eingangsseitig ein Gasmischer 4 zugeordnet, dem über ein wahlweise freigebbares Absperrorgan bzw. Ventil 6 Brenngas 8 und durch den Filter 5 Luft 7 zugeführt werden kann.

In der Ansaugleitung 3 ist ferner ein Turbolader 9 vorgesehen, der durch Verdichtung des zur Verbrennung erforderlichen Gasgemisches den Gasdurchsatz des Motors 2 vergrössert und damit eine höhere Leistungsdichte ermöglicht. Dem Turbolader 9 zugeordnet ist ferner ein Ladeluftkühler 10 zum Kühlen des verdichteten Luft-Brenngasgemisches.

Eine vom Gasmotor 2 wegführende Abgasleitung 11 führt zu einem Dreiwegekatalysator 12 mit dazugehörigem Abgaskühler 13. Beide sind bekannter Bauart und weisen einen Abgasauslass 14 auf, von welchem noch zusätzlich eine Abgasrückführungsleitung 15 wegführt. Letztere ist erfindungsgemäss mit einem Abgasrückführungsventil 16 ausgestattet und mündet in die Ansaugleitung 3.

Die Einrichtung 1 ist noch zusätzlich mit verschieden Messorganen ausgestaltet. Zu diesen gehören eine in der Abgasleitung 11 vor dem Dreiwegekatalysator 12 angeordnete Lambdasonde 17, eine Leistungsmess-Vorrichtung 18 (z.B. zur Messung der elektrischen Leistung des Generators), mindestens ein im Verbrennungsraum des Gasmotors 2 angeordneter Temperaturfühler 19 und ein ebenfalls im Gasmotor 2 angeordneter Klopf-sensor 20.

Die Einrichtung 1 weist des weiteren ein Steuerorgan 21 auf. Dieses ist mit den Steuermitteln 22, 23 und 24 des Abgasrückführungsventils 16, des Gasmischventils 6 und dem beispielsweise als Drosselklappe ausgebildeten Stellglied 25 verbunden, das seinerseits zwischen dem Turbolader 9 und dem Motor 2 in der in diesem Bereich als Druckleitung ausgebildeten Ansaugleitung 3 angeordnet ist.

Das Steuer- und Überwachungsorgan 21 weist vorzugsweise noch Betätigungsorgane, Anzeigegeräte und elektronische Komponenten auf, um den Betriebsablauf wahlweise manuell oder automatisch zu steuern und zu überwachen.

Um eine optimale Reinigung des durch die Abgasleitung 11 hindurch strömenden Abgases sicherzustellen und dadurch möglichst geringe Emissionswerte zu erzielen, werden die von der Lambdasonde 17 ermittelten Messwerte vom Steuerorgan 21 ausgewertet und es wird aufgrund dieser Messwerte und gemäss einer vorgegebener Programmierung das beispielsweise als Stellglied mit Lambdaventil ausgebildete Steuerorgan 23 so angesteuert, dass das im Gasmischer 4 fortlaufend erzeugte Gas-Luftgemisch während des ganzen Verbrennungsprozesses das gewünschte stöchiometrische Verbrennungsverhältnis zwischen Brenngas und Verbrennungsluft aufweist.

Zum Ausgleich der vorstehend erwähnten und den Betrieb der Einrichtung nachteilig beeinflussenden Faktoren dient die Abgasrückführungsleitung 15 mit dem eingebauten Abgasrückführungsventil 16. Letzteres ist beispielsweise als Regulierungsventil mit Stellglied ausgebildet und erlaubt eine durch das Steuerorgan 21 kontrollierte Zuführung von gekühltem Abgas in die Gasansaugleitung 3. Das Steuerorgan 21 reguliert dabei vorzugsweise fortlaufend die dem Luft- Brenngasgemisch pro Zeiteinheit zuzuführende Abgasmenge in Abhängigkeit von der vorzugsweise ebenfalls kontinuierlich gemessenen Brennraumtemperatur. Diese Temperatur wird von dem mindestens eine Temperaturfühler 19 gemessen, dessen Sensor in einem der mehreren Brennzylinder des Motors 2 angeordnet ist. Die kontrollierbare Zuführung von gekühltem Abgas in den Verbrennungsprozess erlaubt, die Verbrennungstemperatur den wechselnden Betriebsbedingungen anzupassen, und dies - wie bereits erwähnt - ohne Einflussnahme auf das stöchiometrische Verhältnis von Brenngas und Verbrennungsluft. Entscheidend bei der Regulierung der Abgasrezirkulationsrate ist eine kurze Reaktionszeit des Regelkreises. Diese Bedingung wird durch die direkte Messung der Brennraumtemperatur und der von dieser Temperatur direkt abhängig gemachten Steuerung des Rücklaufventils 16 erfüllt.

Der mit dem Steuerorgan 21 ebenfalls verbundene Klopfsensor 20 und das Stellglied 25 der Ansaugleitung 3 sind weitere zur Steuerung des Verbrennungsprozesses dienende Komponenten. Funktion und Steuerung dieser Komponenten sind dem Fachmann bekannt und werden daher nachfolgend nicht näher erläutert.

Das erfindungsgemässe Verfahren bzw. die dazu erforderliche Verbrennungseinrichtung mit einem Abgasturbolader 9 in Verbindung mit einer zur Steuerung der Verbrennungstemperatur dienenden Abgasrückführung löst mehrere der eingangs genannten Probleme und weist eine gegenüber den bekannten Verfahren verbesserte Leistung auf. Die Vorteile und Eigenschaften des erfindungsgemässen Verfahrens bzw. der zur Durchführung dieses Verfahrens erforderlichen Einrichtung sind die folgenden:
- Durch den fortlaufenden und sich verhältnismässig schnell auswirkenden Regulierungsmechansimus zur Steuerung der Verbrennungstemperatur kann das nachteilige Klopfen wirksam unterdrückt werden.
- Durch den Einsatz eines Lambda-1-Verbrennungsmotors in Kombination mit einem Dreiwegekatalysator erzeugt die erfindungsgemässe Einrichtung nur geringe Emissionswerte.
- Die Einrichtung erlaubt zudem einen verhältnismässig hohen Aufladegrad und somit eine deutliche Leistungssteigerung. Die Leistungsdichte ist dabei um den Faktor 1,5 bis 2 grösser als bei den beiden eingangs beschriebenen Verbrennungsmotoren und auch der Wirkungsgrad ist bedeutend höher als derjenige von vergleichbaren bekannten Einrichtungen.
- Dadurch, dass während des Betriebes des Motors 2 fortlaufend die innermotorische Verbrennung kontrolliert und optimiert wird, lässt sich nicht nur der Wirkungsgrad bei möglichst geringen Abgasemissionen erhöhen, sondern es werden auch die Standzeiten relevanter Motorenkomponenten erhöht, d.h. deren Verschleiss ist bei der erfindungsgemässen Lösung deutlich kleiner als bei den bekannten Einrichtungen.

## Patentansprüche

1. Verfahren zur Regelung einer Einrichtung (1) im wesentlichen bestehend aus einem Lambda-1-Verbrennungsmotor (2), einer Brennstoffansaugleitung (3), einem in der Ansaugleitung (3) angeordneten Zusatzaggregat (9) zur Verdichtung des zur Verbrennung erforderlichen Luft-Brennstoffgemisches, einem im Abgasstrom angeordneten Katalysator (12) und einer in Strömungsrichtung nach dem Katalysator (12) angeordneten und in die Ansaugleitung (3) mündenden Abgasrückführungsleitung (15) zum Zuführen von gekühltem Abgas zum Luft-Brennstoffgemisch, **dadurch gekennzeichnet, dass** die pro Zeiteinheit dem Luft-Brennstoffgemisch zugeführte Abgasmenge in Abhängigkeit von der im Brennraum des Verbrennungsmotors (2) gemessenen Brennraumtemperatur geregelt wird.

2. Verfahren nach Anspruch 1, **dadurch gekennzeichnet, dass** die Brennraumtemperatur und die pro Zeiteinheit dem Luft-Brennstoffgemisch zuzuführende Abgasmenge fortlaufend gemessen bzw. gesteuert werden, wobei zur Regelung des stöchiometrischen Verhältnisses des Luft-Brennstoffgemisches die Restsauerstoffmenge im Abgas mittels einer Lambdasonde (17) gemessen wird.

3. Verfahren nach Anspruch 1 oder 2, **dadurch gekennzeichnet, dass** dem Luft-Brennstoffgemisch soviel abgekühltes Abgas zugeführt wird, dass die Brennraumtemperatur einen vorgegebenen Sollwert nicht überschreitet, wobei der Anteil des Abgases an der gebildeten Gasmischung von der Leistung des Verbrennungsmotors abhängig ist.

4. Einrichtung zur.Durchführung des Verfahrens gemäss einem der Ansprüche 1 bis 3, **gekennzeichnet durch**
- einen Lambda-1-Verbrennungsmotor (2) mit einer Brennstoffansaugleitung (3),
- ein in der Ansaugleitung (3) angeordnetes Zusatzaggregat (9) zur Verdichtung des zur Verbrennung erforderlichen Luft-Brennstoffgemisches,
- einen im Abgasstrom angeordneten Katalysator (12),
- eine in Strömungsrichtung nach dem Katalysator (12) angeordnete und in die Ansaugleitung (3) mündende Abgasrückführungsleitung (15),
- mindestens einen im Verbrennungsmotor (2) angeordneten Temperaturfühler (19) und
- ein Steuerorgan (21) zur Steuerung der **durch** die Abgasrückführungsleitung (15) pro Zeiteinheit hindurch zuleitenden Abgasmenge in Abhängigkeit von der vom mindestens einen Temperaturfühler (19) gemessenen Brennraumtemperatur.

5. Einrichtung nach Anspruch 4, **dadurch gekennzeichnet, dass** der Verbrennungsmotor (2) ein Gasmotor ist.

6. Einrichtung nach Anspruch 4 oder 5, **dadurch gekennzeichnet, dass** das Zusatzaggregat (9) zur Verdichtung und Verbrennung des Luft-Brenngasgemisches ein Turbolader ist.

7. Einrichtung nach einem der Ansprüche 4 bis 6, **dadurch gekennzeichnet, dass** der Katalysator (12) ein Dreiwegekatalysator ist.

8. Einrichtung nach einem der Ansprüche 4 bis 7, **gekennzeichnet durch** eine in der Abgasleitung vor dem Katalysator (12) angeordnete Lambdasonde (17), eine Leistungsmess-Vorrichtung (18) und einen im Verbrennungsmotor (2) angeordneten Klopfsensor (20), wobei diese Messorgane ebenfalls mit dem zentralen Steuerorgan (21) verbunden sind.

## Claims

1. Method for adjusting a device (1), essentially composed of a lambda 1 internal combustion engine (2), a fuel intake line (3), a supplementary assembly (9) which is arranged in the intake line (3) and has the purpose of sealing the air/fuel mixture necessary for combustion, a catalytic converter (12) arranged in the exhaust gas stream, and an exhaust gas recirculation line (15) which is arranged downstream of the catalytic converter (12) in the direction of flow, opens into the intake line (3) and has the purpose of supplying cooled exhaust gas to the air/fuel mixture, **characterized in that** the quantity of exhaust gas supplied per time unit to the air/fuel mixture is adjusted as a function of the combustion chamber temperature measured in the combustion chamber of the internal combustion engine (2).

2. Method according to Claim 1, **characterized in that** the combustion chamber temperature and the quantity of exhaust gas to be supplied per time unit to the air/fuel mixture is continuously measured or controlled, the quantity of residual oxygen in the exhaust gas being measured by means of a lambda probe (17) in order to adjust the stoichiometric ratio of the air/fuel mixture.

3. Method according to Claim 1 or 2, **characterized in that** the air/fuel mixture has added to it a quantity of cooled exhaust gas which is such that the combustion chamber temperature does not exceed a predefined set point value, the proportion of exhaust gas making up the gas mixture which is formed being dependent on the power of the internal combustion engine.

4. Device for carrying out the method according to one of Claims 1 to 3, **characterized by**
- a lambda 1 internal combustion engine (2) having a fuel intake line (3),
- a supplementary assembly (9) which is arranged in the intake line (3) and has the purpose of sealing the air/fuel mixture necessary for combustion,
- a catalytic converter (12) arranged in the exhaust gas stream,
- an exhaust gas recirculation line (15) which is arranged downstream of the catalytic converter (12) in the direction of flow and opens into the intake line (3),
- at least one temperature sensor (19) which is arranged in the internal combustion engine (2), and
- a control element (21) for controlling the quantity of exhaust gas to be fed per time unit through the exhaust gas recirculation line (15), as a function of the combustion chamber temperature measured by the at least one temperature sensor (19).

5. Device according to Claim 4, **characterized in that** the internal combustion engine (2) is a gas engine.

6. Device according to Claim 4 or 5, **characterized in that** the supplementary assembly (9) is a turbo charger for compressing and burning the air/fuel mixture.

7. Device according to one of Claims 4 to 6, **characterized in that** the catalytic converter (12) is a three-way catalytic converter.

8. Device according to one of Claims 4 to 7, **characterized by** a lambda probe (17) arranged upstream of the catalytic converter (12) in the exhaust gas line, a power-measuring device (18) and a knock sensor (20) arranged in the internal combustion engine (2), these measuring elements also being connected to the central control element (21).

## Revendications

1. Procédé pour réguler un dispositif (1) essentiellement composé d'un moteur thermique lambda-1 (2), d'une conduite d'admission du combustible (3), d'un agrégat additionnel (9) disposé dans la conduite d'admission (3) pour la compression du mélange air - combustible nécessaire à la combustion, d'un catalyseur (12) disposé dans le courant des gaz brûlés et d'une conduite de recyclage des gaz brûlés (15) disposée dans la direction du courant, après le catalyseur (12) et débouchant dans la conduite d'admission (3) pour ajouter des gaz brûlés refroidis au mélange air - combustible, **caractérisé en ce que** la quantité de gaz brûlés ajoutés au mélange air - combustible par unité de temps est régulée en fonction de la température de la chambre de combustion mesurée dans la chambre de combustion du moteur thermique (2).

2. Procédé selon la revendication 1, **caractérisé en ce que** la température de la chambre de combustion et la quantité de gaz brûlés qui est à ajouter au mélange air - combustible par unité de temps sont mesurées resp. commandées en continu, où la quantité d'oxygène restante dans les gaz brûlés est mesurée au moyen d'une sonde lambda (17) pour réguler le coefficient stoechiométrique du mélange air - combustible.

3. Procédé selon les revendications 1 ou 2, **caractérisé en ce que** l'on ajoute au mélange air - combustible autant de gaz brûlés refroidis afin que la température de la chambre de combustion ne dépasse pas une valeur de consigne spécifiée, où la part des gaz brûlés dans le mélange de gaz formé dépend de la puissance du moteur thermique.

4. Dispositif pour la mise en oeuvre dudit procédé selon l'une quelconque des revendications 1 à 3, **caractérisé en**
- un moteur thermique lambda-1 (2) avec une conduite d'admission du combustible (3),
- un agrégat additionnel (9) disposé dans la conduite d'admission (3) pour la compression du mélange air - combustible nécessaire à la combustion,
- un catalyseur (12) disposé dans le courant des gaz brûlés,
- une conduite de recyclage des gaz brûlés (15) disposée dans la direction du courant, après le catalyseur (12) et débouchant dans la conduite d'admission (3),
- au moins un capteur de température (19) disposé dans le moteur thermique (2) et
- un organe de commande (21) pour la commande de la quantité de gaz brûlés à envoyer à travers la conduite de recyclage des gaz brûlés (15) par unité de temps en fonction de la température de la chambre de combustion mesurée par au moins un capteur de température (19).

5. Dispositif selon la revendication 4, **caractérisé en ce que** le moteur thermique (2) est un moteur à gaz.

6. Dispositif selon les revendications 4 ou 5, **caractérisé en ce que** l'agrégat additionnel (9) pour la compression et la combustion du mélange air - gaz combustible est un turbocompresseur.

7. Dispositif selon l'une quelconque des revendications 4 à 6, **caractérisé en ce que** le catalyseur (12) est un catalyseur à trois voies.

8. Dispositif selon l'une quelconque des revendications 4 à 7, **caractérisé en** une sonde lambda (17) disposée dans la conduite des gaz brûlés avant le catalyseur (12), un dispositif de mesure de puissance (18) et un capteur de cliquetis (20) disposé dans le moteur thermique (2), où ces organes de mesure sont également reliés avec l'organe de commande (21) central.
